# EUROPÄISCHE PATENTSCHRIFT

(11) **EP 1 244 878 B1**
(45) Veröffentlichungstag und Bekanntmachung des Hinweises auf die Patenterteilung: **18.02.2004**
(21) Anmeldenummer: 00983126.4
(22) Anmeldetag: 10.11.2000
(51) Int. Cl.: F16D 3/74

(54) **ELASTISCHE WELLENKUPPLUNG**
ELASTIC SHAFT COUPLING
SYSTEME DE COUPLAGE D'ARBRES ELASTIQUE

(30) Priorität: 15.11.1999 DE 19955051
(43) Veröffentlichungstag der Anmeldung: 02.10.2002
(73) Patentinhaber: Hackforth GmbH, 44653 Herne (DE)
(72) Erfinder: WALTER, Jürgen, 45721 Haltern (DE); FALZ, Ulrich, 44267 Dortmund (DE)
(74) Vertreter: Behrendt, Arne, Dipl.-Ing.
(86) Internationale Anmeldenummer: PCT/EP2000/011156
(87) Internationale Veröffentlichungsnummer: WO 2001/036833

(56) Entgegenhaltungen:
- DE-A- 19 808 035
- DE-C- 534 064
- FR-A- 1 544 374
- US-A- 1 664 052
- US-A- 3 063 261
- US-A- 3 134 246
- US-A- 3 910 068

## Beschreibung

### Elastische Wellenkupplung

Die Erfindung betrifft eine elastische Wellenkupplung nach den Oberbegriff des Anspruchs 1 mit mindestens einem Torsionselement, welches als Übertragungselement einen Elastomerkörper aufweist, an dem Anschlußflansche befestigt sind.

Bei nach dem Stande der Technik bekannten Wellenkupplungen der genannten Art besteht ein Problem darin, daß sich der Elastomerkörper insbesondere bei höheren Drehzahlen axial zusammenzieht. Das ist darauf zurückzuführen, daß das verhältnismäßig weiche Elastomer unter Einwirkung der Fliehkräfte nach außen drängt, so daß die Anschtußflansche zusammengezogen werden. Dieser Effekt wird durch die bei der Drehmomentübertragung auftretende Torsions-Scherbelastung noch verstärkt. Besonders groß ist dieser Effekt dann, wenn der Elastomerkörper aus besonders weichem Material besteht oder von Kühlöffnungen durchsetzt ist. Die axialen Bewegungen der Anschlußflansche müssen in den sich anschließenden Baugruppen ausgeglichen werden, was einen erheblichen Aufwand bedeutet.

Nach dem Stande der Technik (vgl. DE-C-37 10 390 bzw. DE-A-4 34 722) ist es bekannt, den Elastomerkörper einer elastischen Wellenkupplung mittig durch anvulkanisierte und innen auf der Welle abgestützte Ringscheiben zu unterbrechen. Diese Ringscheiben und deren Lagerung bedeuten aber einen erheblichen zusätzlichen Aufwand und beeinträchtigen die Nachgiebigkeit der elastischen Wellenkupplung.

Aus dem US-Patent 3 910 068 ist es bereits bekannt, den Elastomerkörper einer elastischen Wellenkupplung mittels eines zylindrischen Rohres gegen ein radial nach außen gerichtetes Ausbeulen abzustützen. Die vorgeschlagene Ausführung hat jedoch mehrere Nachteile. Das abstützende zylindrische Rohr behindert die Torsionsbewegung und führt im Rahmen torsionsbedingter Scherungen zu verschleißbehafteten Relativbewegungen zwischen dem Elastomerkörper und dem starren zylindrischen Rohr. Desweiteren behindert die Abstützung mittels des zylindrischen Rohres die Wärmeabfuhr aus dem Elastomerkörper und hat bei höheren zu übertragenden Leistungen eine Zerstörung des Elastomerkörpers durch Hitze zur folge.

Es ist deshalb Aufgabe der Erfindung, die elastische Wellenkupplung der eingangs genannten Art dahingehend weiterzubilden, daß die axiale Verkürzung des Elastomerkörpers bei möglichst geringer Beeinträchtigung der Nachgiebigkeit verringert wird.

Zur Lösung dieser Aufgabe schlägt die Erfindung vor, daß der Stützring als Metallprofil ausgebildet ist, welches an seiner Innenseite in das Volumen des Elastomerkörpers ragende Vorsprünge aufweist.

Der erfindungsgemäß vorgeschlagene Stützring hält den Elastomerkörper wie eine außenliegende Bandage zusammen und stützt die elastomeren Massen gegen die Fliehkraft ab. Infolgedessen bewegen sich die elastomeren Massen des Elastomerkörpers weniger nach außen, so daß im Ergebnis die axiale Verkürzung des Elastomerkörpers weitestgehend unterbleibt oder sich zumindest entscheidend verringert. Dadurch, daß der Stützring ausschließlich an dem Elastomerkörper abgestützt ist, beeinträchtigt der Stützring die Nachgiebigkeit der elastischen Wellenkupplung kaum.

Vorzugsweise ist der Stützring im Bereich der Hälfte der axialen Länge des Elastomerkörpers angeordnet, das heißt also dort, wo die radiale Verformung nach außen am meisten zu befürchten ist.

Der in Umfangsrichtung verlaufende Stützring ist zweckmäßig als Metallprofil ausgebildet, welches an seiner Innenseite in das Volumen des Elastomerkörpers vorstehende Vorsprünge aufweist. Durch die Vorsprünge verbindet sich der Stützring besonders innig mit dem Elastomerkörper und wird gewissennaßen integraler Bestandteil von diesem.

Zur Erleichtung der Montage und Demontage der elastischen Wellenkupplung kann der Elastomerkörper - ebenso wie die Anschlußflansche - als in Segmente unterteilter Rotationskörper ausgebildet sein, wobei der Stützring In gleicher Weise segmentiert ist und die Stützringsegmente mit Verbindungsmitteln zum Verbinden untereinander versehen sind. Die Verbindungsmittel sorgen dafür, daß die Stützringsegmente jedenfalls nach der Montage der Kupplung einen geschlossenen, ausschließlich am Elastomerkörper abgestützten Ring bilden.

Zweckmäßig weisen die Stützringsegmente nach außen vorstehende Befestigungsaugen auf, die mit in Umfangsrichtung des Elastomerkörpers verlaufenden Verbindungslaschen verschraubt sind. Diese Ausbildung der Verbindungsmittel erlaubt eine besonders einfache und schnelle Montage und Demontage des Elastomerkörpers.

Um eine übermäßige Erwärmung des Elastomerkörpers zu vermeiden, ist der Elastomerkörper mit einer Vielzahl von Kühlluftkanälen versehen, deren im wesentlichen axial verlaufenden Ansaugöffnungen im Bereich der Anschlußflansche und deren im wesentlich radial verlaufenden Austrittsöffnungen in der Peripherie des Elastomerkörpers angeordnet sind. Solche axial-radial verlaufenden Kühlluftkanälen arbeiten insofern besonders effektiv, als durch die Drehbewegung des Elastomerkörpers - ähnlich wie bei einem Radialverdichter -ein erhebliches Druckgefälle zwischen den Ansaugöffnungen und den Austrittsöffnungen erzeugt wird. Dieses Druckgefälle sorgt für einen besonders intensiven Kühlluftstrom durch den Elastomerkörper.

Eine optimale Wärmeabfuhr ergibt sich, wenn zwei Gruppen von axial-radial verlaufenden Kühlluftkanälen vorgesehen sind, die in zwei beiderseits des Stützringes angeordneten Axialebenen angeordnet sind. Durch eine große Zahl von beiderseits der axialen Mittenebene angeordneten, axial-radial verlaufenden Kühlluftkanäle wird eine intensive und gleichmäßig verteilte Wärmeabfuhr erreicht, so daß sich in dem Elastomerkörper keine Wärmenester ausbilden können.

Zweckmäßig sind die beiden Gruppen von axial-radial verlaufenden Kühlluftkanälen in bezug auf die axiale Mittenebene der Wellenkupplung symmetrisch angeordnet. Hierdurch ergeben sich beiderseits des Stützringes antriebs- und abtriebsseitig die gleichen Elastizitäts- und Erwärmungsverhältnisse. Außerdem können die so ausgestalteten Elastomerkörper bei der Montage rechts wie links eingesetzt werden.

Ein Ausführungsbeispiel der Erfindung wird im Folgenden anhand der Zeichnungen näher erläutert:

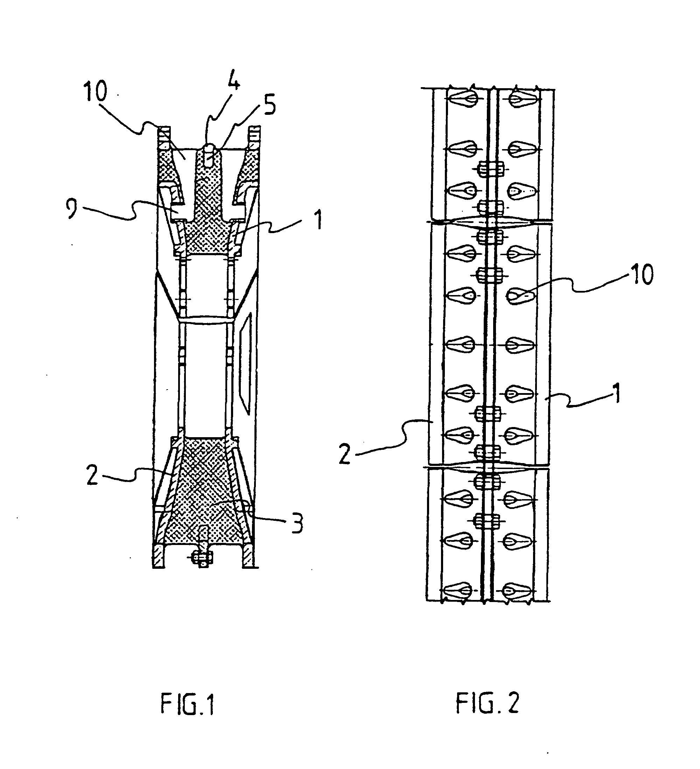

- Figur 1: einen in axialer Richtung verlaufenden Schnitt durch eine Wellenkupplung gemäß der Erfindung;
- Figur 2: eine Draufsicht A zu Figur 1, in die Zeichnungsebene abgewickelt;

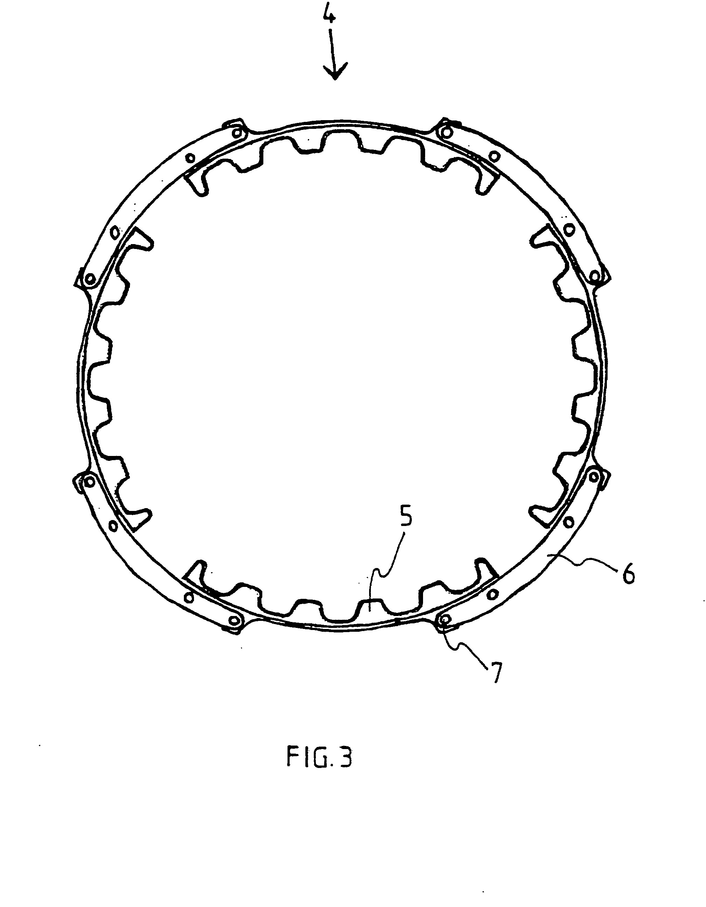

- Figur 3: eine isolierte Seitenansicht des Stützringes.

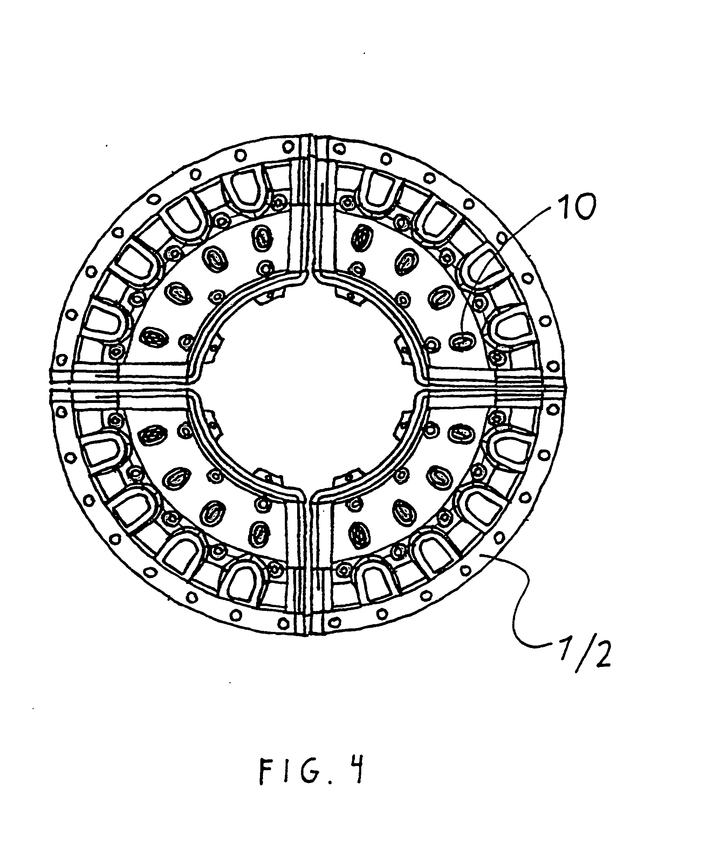

- Figur 4: eine axiale Ansicht der in Figur 1 dargestellten Wellenkupplung.

Die in der Zeichnung dargestellte Wellenkupplung weist zwei Anschlußflansche 1 und 2 auf, zwischen denen ein Elastomerkörper 3 angeordnet ist. Die Anschlußflansche 1 und 2 und der Elastomerkörper 3 sind durch Vulkanisieren miteinander verbunden.

Beim dargestellten Ausführungsbeispiel sind sowohl die Anschlußflansche 1 und 2 als auch der Elastomerkörper 3 in vier Segmente unterteilt, wobei jedes Segment sich über einen Bogen von etwa 90° erstreckt.

Erfindungsgemäß ist der Elastomerkörper 3 im Bereich der Hälfte seiner axialen Länge von einem in Umfangsrichtung verlaufenden Stützring 4 umgeben, welcher ausschließlich an dem Elastomerkörper 3 abgestützt ist. Der in Umfangsrichtung verlaufende Stützring 4 ist als Metallprofil ausgebildet, welches an seiner Innenseite mit nach innen vorstehenden Vorsprüngen 5 versehen ist, die in das Volumen des Elastomerkörpers 4 ragen. Dabei ist der Stützring 4 in gleicher Weise segmentiert, wie der Elastomerkörper 3. Die einzelnen Segmente des Stützringes 4 sind untereinander durch Verbindungslaschen 6 verbunden, die sich zwischen den einzelnen Stützringsegmenten in Umfangsrichtung erstrecken. Die Verbindungslaschen 6 sind mit Befestigungsaugen 7 verschraubt, die sich außen an den Stützringsegmenten befinden und radial über den Außenumfang des Stützringes 4 vorstehen.

In dem Elastomerkörper 3 sind weiterhin Kühlluftkanäle 8 vorgesehen. Diese Kühlluftkanäle 8 haben Ansaugöffnungen 9, die im wesentlichen axial durch die Anschlußflansche 1 bzw. 2 verlaufen, und Auströmöffnungen 10, die beiderseits des Stützringes 4 im wesentlichen radial aus dem Elastomerkörper 3 austreten.

Die axial-radial verlaufenden Kühlluftkanäle 8 sind in zwei beiderseitig des Stützringes 4 befindlichen Axialebenen in bezug auf die axiale Mittenebene der Wellenkupplung symmetrisch angeordnet.

## Patentansprüche

1. Elastische Wellenkupplung mit mindestens einem Torsionselement, welches als Übertragungselement einen Elastomerkörper (3) aufweist,an dem Anschlußflansche (1, 2) befestigt sind, wobei der Elastomerkörper (3) von einem in Umfangsrichtung verlaufenden Stützring (4) umgeben ist, welcher ausschließlich mit dem Elastomerkörper (3) verbunden ist **dadurch gekennzeichnet, daß** der Stützring als Metallprofil ausgebildet ist, welches an seiner Innenseite in das Volumen des Elastomerkörpers (3) ragende Vorsprünge (5) aufweist

2. Elastische Wellenkupplung nach Anspruch 1, **dadurch gekennzeichnet, daß** der Stützring (4) im Bereich der Hälfte der axialen Länge des Elastomerkörpers (3) angeordnet ist.

3. Elastische Wellenkupplung nach Anspruch 1, **dadurch gekennzeichnet, daß** der Elastomerkörper (3) als in Segmente unterteilter Rotationskörper ausgebildet ist, wobei der Stützring (4) in gleicher Weise segmentiert ist und die Stützringsegmente mit Verbindungsmitteln zum Verbindung untereinander versehen sind.

4. Elastische Wellenkupplung nach Anspruch 4, **dadurch gekennzeichnet, daß** die Stützringsegmente radial nach außen vorstehende Befestigungsaugen (7) aufweisen, die mit in Umfangsrichtung des Elastomerkörpers (3) verlaufende Verbindungslaschen (6) verschraubt sind.

5. Elastische Wellenkupplung nach einem der Ansprüche. 1 bis 4, **dadurch gekennzeichnet, daß** der Elastomerkörper (3) mit einer Vielzahl von Kühlluftkanälen (8) versehen ist, deren im wesentlichen axial verlaufenden Ansaugöffnungen (9) im Bereich der Anschlußflansche (1, 2) und deren im wesentlichen radial verlaufenden Ausströmöffnungen (10) in der Peripherie des Elastornerkörpers (3) angeordnet sind.

6. Elastische Wellenkupplung nach Anspruch 5, **dadurch gekennzeichnet, daß** zwei Gruppen von axial-radial verlaufenden Kühlluftkanälen (8) vorgesehen sind, die in zwei beiderseits des Stützringes (4) angeordneten Axialebenen angeordnet sind.

7. Elastische Wellenkupplung nach Anspruch 6, **dadurch gekennzeichnet, daß** die beiden Gruppen von axial-radial verlaufenden Kühlluftkanälen (8) in bezug auf die axiale Mittenebene der Wellenkupplung symmetrisch angeordnet sind.

## Claims

1. An elastic shaft coupling comprising at least one torsion element which as a transmission element has an elastomer body (3) to which connecting flanges (1, 2) are fixed, wherein the elastomer body (3) is surrounded by a support ring (4) which extends in the peripheral direction and which is connected exclusively to the elastomer body (3), **characterised in that** the support ring is in the form of a metal profile which at its inside has projections (5) protruding into the volume of the elastomer body (3).

2. An elastic shaft coupling according to claim 1 **characterised in that** the support ring (4) is arranged in the region of half of the axial length of the elastomer body (3).

3. An elastic shaft coupling according to claim 1 **characterised in that** the elastomer body (3) is in the form of a rotational body subdivided into segments, wherein the support ring (4) is segmented in the same manner and the support ring segments are provided with connecting means for connecting them together.

4. An elastic shaft coupling according to claim 4 **characterised in that** the support ring segments have radially outwardly projecting fixing eyes (7) which are screwed to connecting bars (6) extending in the peripheral direction of the elastomer body (3).

5. An elastic shaft coupling according to one of claims 1 to 4 **characterised in that** the elastomer body (3) is provided with a plurality of cooling air passages (8) whose substantially axially extending intake openings (9) are arranged in the region of the connecting flanges (1, 2) and whose substantially radially extending outlet openings (10) are arranged in the periphery of the elastomer body (3).

6. An elastic shaft coupling according to claim 5 **characterised in that** there are provided two groups of axially-radially extending cooling air passages (8) which are arranged in two axial planes disposed on both sides of the support ring (4).

7. An elastic shaft coupling according to claim 6 **characterised in that** the two groups of axially-radially extending cooling air passages (8) are arranged symmetrically with respect to the axial central plane of the shaft coupling.

## Revendications

1. Couplage d'arbres élastique avec au moins un élément de torsion, qui présente comme élément de transmission un corps élastomère (3) sur lequel sont fixées des brides de raccordement (1, 2) où le corps élastomère (3) est entouré par une bague de support (4) s'étendant dans la direction périphérique qui est reliée exclusivement au corps élastomère (3), **caractérisé en ce que** la bague de support est réalisée comme profilé métallique qui présente à son coté intérieur des saillies (5) faisant saillie dans le volume du corps élastomère (3).

2. Couplage d'arbres élastique selon la revendication 1, **caractérisé en ce que** la bague de support (4) est disposée dans la zone de la moitié de la longueur axiale du corps élastomère (3).

3. Couplage d'arbres élastique selon la revendication 1, **caractérisé en ce que** le corps élastomère (3) est réalisé comme corps de rotation pouvant être divisé en segments, où la bague de support (4) est segmentée de la même manière, et les segments de la bague de support sont pourvus de moyens de liaison en vue de leur assemblage.

4. Couplage d'arbres élastique selon la revendication 4, **caractérisé en ce que** les segments de la bague de support présentent des oeillets de fixation (7) faisant radialement saillie vers l'extérieur qui sont assemblés par vissage avec des languettes de liaison (6) s'étendant dans la direction périphérique du corps élastomère (3).

5. Couplage d'arbres élastique selon l'une des revendications 1 à 4, **caractérisé en ce que** le corps élastomère (3) est pourvu d'une pluralité de canaux d'air de refroidissement (8) dont les ouvertures d'aspiration (9) s'étendant sensiblement axialement sont disposées au voisinage des brides de raccordement (1, 2) et leurs ouvertures d'écoulement (10) s'étendant sensiblement radialement dans la périphérie du corps élastomère (3).

6. Couplage d'arbres élastique selon la revendication 5, **caractérisé en ce que** deux groupes de canaux d'air de refroidissement (8) s'étendant axialement-radialement sont prévus, qui sont disposés dans deux plans axiaux disposés des deux côtés de la bague de support (4).

7. Couplage d'arbres élastique selon la revendication 6, **caractérisé en ce que** les deux groupes de canaux d'air de refroidissement (8) s'étendant axialement-radialement sont disposés d'une manière symétrique par rapport au plan médian axial du couplage d'arbres.
